# EUROPEAN PATENT APPLICATION

(11) **EP 3 206 406 A1**
(43) Date of publication of application: **16.08.2017**
(21) Application number: 15848747.0
(22) Date of filing: 29.05.2015
(51) Int. Cl.: H04N 21/258, H04N 21/63, H04N 21/643, H04N 21/858

(54) **HLS PROTOCOL-BASED USER INFORMATION ACQUISITION METHOD AND SERVER**

(30) Priority: 11.10.2014 CN 201410535959
(71) Applicant: ZTE Corporation, Shenzhen, Guangdong 518057 (CN)
(72) Inventor: CHEN, Guangliang, Shenzhen Guangdong 518057 (CN); LIU, Zhiqiang, Shenzhen Guangdong 518057 (CN); WEI, Yuefei, Shenzhen Guangdong 518057 (CN); WANG, Jindong, Shenzhen Guangdong 518057 (CN); ZHAO, Pei, Shenzhen Guangdong 518057 (CN)
(74) Representative: Savi, Massimiliano
(86) International application number: PCT/CN2015/080339
(87) International publication number: WO 2016/054923

(57) **Abstract**

A method for acquiring user information based on an HLS protocol and a server based on an HLS protocol are provided. The method is applied to a server supporting the HLS protocol, and includes: after receiving a request from a client for requesting an index file, acquiring Uniform Resource Locator, URL, information and Uniform Resource Identifier, URI, information of the index file from the request; generating user information identifier for a user; constructing user management instruction information according to the user information identifier; modifying the URL of the index file, inserting the user management instruction information before the URI of the index file; sending the modified URL of the index file to the client.

## Description

### Technical Field

The document relates to the field of multimedia technology, and more particularly to a method for acquiring user information based on an HLS protocol and a server supporting an HLS protocol.

### Background

With the development of communication technology, the application of multimedia technology is more and more extensive. The segmented program refers to segmenting a program to create multiple segmented programs and a play list when producing program. When played, through the a Hyper Text Transfer Protocol Live Streaming (HLS) protocol, the playlist is first acquired, and then segmented programs are acquired in sequence according to the play list to play. The manner is compatible with the existing CDN (Content Delivery Network) system.

With respect to the web CDN system, since the web server is stateless, a method for acquiring user information in the existing technology includes that: a client obtains a URL (Uniform Resource Locator) of an HLS index file from an EPG (Electronic Program Guide); the client requests the server according to the URL acquired from the EPG; the server constructs a new URL based on the requested content, and the new URL adds the character ? and the user information identifier behind a URI (Uniform Resource Identifier) in the request of the client, and the server sends the new URL to the client in a redirection way. After the client acquires the index file by using the HLS protocol, the client re-splices to form a new URI (Uniform Resource Identifier) to acquire a segment file. Since the index file name and all subsequent contents in the URI of the requested index file will be replaced in the new URI, the loss of user information identifier will be caused, and the server cannot get the user information identifier after receiving the URL for the user to request the segment file, and as a result, user management cannot be performed.

### Summary

The document provides a method for acquiring user information based on an HLS protocol and a server based on an HLS protocol, such that a server supporting the HLS protocol can acquire user information of a client as well when the client requests a segment file, thereby managing the user.

A method for acquiring user information based on an HLS protocol, applied to a server supporting the HLS protocol, includes:
after receiving a request from a client for requesting an index file, acquiring Uniform Resource Locator, URL, information and Uniform Resource Identifier, URI, information of the index file from the request;
generating a user information identifier for a user, and constructing user management instruction information according to the user information identifier;
modifying the URL of the index file, inserting the user management instruction information before the URI of the index file, and sending the modified URL of the index file to the client.

In an exemplary embodiment, the method further includes the following feature: constructing user management instruction information according to the user information identifier includes any one of the following modes a) - d):
a) using the user information identifier as the user management instruction information;
b) using an encoded user information identifier as the user management instruction information;
c) using an additional information identification code and the user information identifier as the user management instruction information;
d) using an additional information identification code and an encoded user information identifier as the user management instruction information;
herein, the additional information identification code is used to identify whether there is a user information identifier in the URL.

In an exemplary embodiment, the method further includes the following feature:
the encoded user information identifier is a user information identifier encoded with BASE64.

In an exemplary embodiment, the method further includes the following feature: the method further includes:
after receiving a request from the client for requesting a segment file, parsing out the user information identifier from the URL information carried in the request, and managing the user according to the user information identifier, herein managing the user according to the user information identifier includes: allowing or rejecting access of the user;
when allowing the access of the user, sending the segment file to the client, and managing the user according to the user information identifier, herein managing the user according to the user information identifier includes: making statistic on a size and/or download time of data downloaded by the user.

A method for acquiring user information based on an HLS protocol, applied to a server supporting the HLS protocol, includes:
after receiving a request from a client for requesting an index file, reading the index file;
generating a user information identifier for a user, and constructing user management instruction information according to the user information identifier;
modifying the index file, adding the user management instruction information in a parameter manner behind Uniform Resource Identifier, URI, of each segment file in the index file, and sending the modified index file to the client.

In an exemplary embodiment, the method further includes the following feature:
constructing user management instruction information according to the user information identifier includes: using the user information identifier as the user management instruction information; or using an encoded user information identifier as the user management instruction information.

In an exemplary embodiment, the method further includes the following feature:
the encoded user information identifier is a user information identifier encoded with BASE64.

In an exemplary embodiment, the method further includes the following feature: the method further includes:
After receiving a request from the client for requesting a segment file, parsing out the user information identifier from the URL information carried in the request, and managing the user according to the user information identifier, herein managing the user according to the user information identifier includes: allowing or rejecting an access of the user;
when allowing the access of the user, sending the segment file to the client, and managing the user according to the user information identifier, herein managing the user according to the user information identifier includes: making statistic on size and/or download time of data downloaded by the user.

A server supporting an HLS protocol includes a first index file request receiving module, a first index file request processing module and a first index file request feedback module.

The first index file request receiving module is configured to, receive a request from a client for requesting an index file, and trigger a first index request processing module to process.

The first index file request processing module is configured to, acquire Uniform Resource Locator, URL, information and Uniform Resource Identifier, URI, information of the index file from the request; generate user information identifier for a user, and construct user management instruction information according to the user information identifier; and modify the URL of the index file, insert the user management instruction information before the URI of the index file.

The first index file request feedback module is configured to, send the modified URL of the index file to the client.

In an exemplary embodiment, the server further includes the following feature: that the first index file request processing module is configured to construct the user management instruction information according to the user information identifier includes any one of the following modes a) to d):
a) using the user information identifier as the user management instruction information;
b) using an encoded user information identifier as the user management instruction information;
c) using an additional information identification code and the user information identifier as the user management instruction information;
d) using an additional information identification code and an encoded user information identifier as the user management instruction information;
herein, the additional information identification code is used to identify whether there is a user information identifier in the URL.

In an exemplary embodiment, the server further includes the following feature:
the encoded user information identifier is a user information identifier encoded with BASE64.

In an exemplary embodiment, the server further includes the following features: the server further includes a first segment file request receiving module, a first segment file request processing module and a first segment file request feedback module.

The first segment file request receiving module is configured to, receive a request from the client for requesting a segment file, and trigger the first segment file request processing module to process.

The first segment file request processing module is configured to, parse out the user information identifier from the URL information carried in the request and manage the user according to the user information identifier, which includes: allowing or rejecting an access of the user; when allowing the access of the user, notifying the first segment file request feedback module.

The first segment file request feedback module is configured to send the segment file to the client after receiving the notification, and manage the user according to the user information identifier, which includes: making statistic on size and/or download time of data downloaded by the user.

A server supporting an HLS protocol includes a second index file request receiving module, a second index file request processing module and a second index file request feedback module.

The second index file request receiving module is configured to receive a request from a client for requesting an index file, and trigger a second index request processing module to process.

The second index file request processing module is configured to, read the index file; generate a user information identifier for a user, and construct user management instruction information according to the user information identifier; modify the index file, and add the user management instruction information in a parameter manner behind Uniform Resource Identifier, URI of each segment file in the index file.

The second index file request feedback module is configured to send the modified index file to the client.

In an exemplary embodiment, the server further includes the following feature: that the second index file request processing module is configured to construct user management instruction information according to the user information identifier includes: using the user information identifier as the user management instruction information; or using an encoded user information identifier as the user management instruction information.

In an exemplary embodiment, the server further includes the following feature:
the encoded user information identifier is a user information identifier encoded with BASE64.

In an exemplary embodiment, the server further includes the following feature: the server further includes a second segment file request receiving module, a second segment file request processing module and a second segment file request feedback module.

The second segment file request receiving module is configured to, receive a request from the client for requesting a segment file, and trigger a second segment file request processing module to process.

The second segment file request processing module is configured to parse out a user information identifier from URL information carried in the request and manage the user according to the user information identifier, which includes: allowing or rejecting an access of the user; when allowing the access of the user, notifying the second segment file request feedback module.

The second segment file request feedback module is configured to send the segment file to the client after receiving the notification, and manage the user according to the user information identifier, which includes: making statistic on a size and/or a download time of data downloaded by the user.

A computer storage medium where computer-executable instructions are stored is provided. The computer-executable instructions are used to execute any one of the above-mentioned methods.

Compared with the existing technology, according to a method for acquiring user information based on an HLS protocol and a server based on an HLS protocol provided by the document, the server inserts instruction information of the user identification information before the URI of the index file, and then the server sends the URL of the index file to a client in a redirection way; or the server modifies the index file, adds indication information of the user identification information in a parameter manner behind the URI of each segment file in the index file, and then sends the modified index file to the client. Both of the above-mentioned manners can make the URL information for the client to request a segment file carry the user identification information, such that the server supporting the HLS protocol can also acquire the user information of the client when the client requests the segment file, thereby managing the user.

### Brief Description of the Drawings

FIG. 1 is a flowchart of a method for acquiring user information based on an HSL protocol according to an embodiment of the present invention.
FIG. 2 is a flowchart of another method for acquiring user information based on an HSL protocol according to an embodiment of the present invention.
FIG. 3 is a schematic diagram of a structure of a server supporting an HLS protocol according to an embodiment of the present invention.
FIG. 4 is a schematic diagram of a structure of another server supporting an HLS protocol according to an embodiment of the present invention.

### Detailed Description

The embodiments of the present invention will be described in detail below in conjunction with accompanying drawings. It should be noted that embodiments in the document and characteristics in the embodiments can be arbitrarily combined with each other in the condition of no conflict.

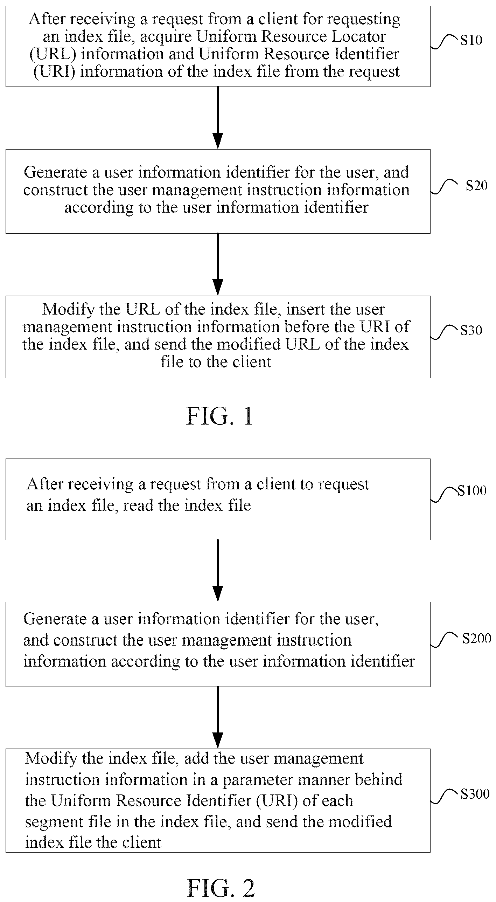

As shown in FIG. 1, an embodiment of the present invention provides a method for acquiring user information based on an HLS protocol, applied to a server based on an HLS protocol. The method includes the following steps S10-S50.

In step S10, after a request from a client for requesting an index file is received, Uniform Resource Locator (URL) information and Uniform Resource Identifier (URI) information of the index file are acquired from the request.

In step S20, a user information identifier for the user is generated, and the user management instruction information is constructed according to the user information identifier.

In step S30, the URL of the index file is modified, and the user management instruction information is inserted before the URI of the index file, and the modified URL of the index file is sent to the client.

In step S20, the user management instruction information is constructed according to the user information identifier by any one of the following modes a) to d):
a) using the user information identifier as the user management instruction information;
b) using an encoded user information identifier as the user management indication information;
c) using an additional information identification code and the user information identifier as the user management instruction information;
d) using an additional information identification code and an encoded user information identifier as the user management instruction information.

Herein, the additional information identification code is used to identify whether there is a user information identifier in a URL.

For example, the additional identification code is "/.hls/".

Herein, the encoded user information is identified as a user information identifier encoded with BASE64.

After the step S30, the following steps are also included.

In step S40, after a request from a client for requesting a segment file, the user information identifier is parsed out from the URL information carried in the request, and the user is managed according to the user information identifier, including: allowing or rejecting an access of the user.

In step S50, if the user is allowed to access, the segment file is sent to the client, and the user is managed according to the user information identifier, including: making statistic on size and/or downloading time of data downloaded by the user.

As shown in FIG. 2, an embodiment of the present invention provides a method for acquiring user information based on an HLS protocol, applied to a server based on an HLS protocol. The method includes the following steps S100-S500.

In step S100, after a request from a client for requesting an index file is received, the index file is read.

In step S200, a user information identifier for the user is generated, and the user management instruction information is constructed according to the user information identifier.

In step S300, the index file is modified, and the user management instruction information is added in a parameter manner behind the Uniform Resource Identifier (URI) of each segment file in the index file, and the modified index file is sent to the client.

In step S200, constructing user management instruction information according to the user information identifier includes: using the user information identifier as the user management instruction information or using an encoded user information identifier as the user management instruction information.

After the step S300, the following steps S400-S500 are also included.

In step S400, after a request from a client for requesting a segment file is received, the user information identifier is parsed out from URL information carried in the request, and the user is managed according to the user information identifier, including: allowing or rejecting an access of the user.

In step S500, if the user is allowed to access, the segment file is sent to the client, and the user is managed according to the user information identifier, including: making statistic on size and/or downloading time of data downloaded by the user.

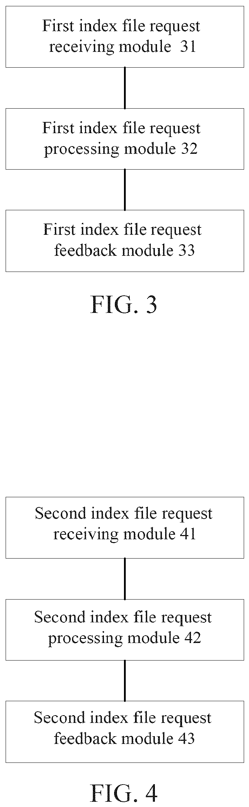

As shown in FIG. 3, an embodiment of the present invention provides a server based on an HLS protocol. The server includes a first index file request receiving module 31, a first index file request processing module 32 and a first index file request feedback module 33.

The first index file request receiving module 31 is configured to receive a request from a client for requesting an index file, and trigger the first index request processing module 32 to process.

The first index file request processing module 32 is configured to acquire Uniform Resource Locator, URL, information and Uniform Resource Identifier, URI, information of the index file from the request; generate user information identifier for a user, and construct user management instruction information according to the user information identifier; modify the URL of the index file, and insert the user management instruction information before the URI of the index file.

The first index file request feedback module 33 is configured to send the modified URL of the index file to the client.

The first index file request processing module is configured to construct user management instruction information according to the user information identifier by any one of the following modes a) - d):
a) using the user information identifier as the user management instruction information;
b) using an encoded user information identifier as the user management indication information;
c) using an additional information identification code and the user information identifier as the user management instruction information;
d) using an additional information identification code and an encoded user information identifier as the user management instruction information.

Herein, the additional information identification code is used to identify whether there is a user information identifier in a URL.

For example, the additional identification code is "/.hls/".

Herein the encoded user information is identified as a user information identifier encoded with BASE64.

The server may further include a first segment file request receiving module, a first segment file request processing module and a first segment file request feedback module.

The first segment file request receiving module is configured to, receive a request from the client for requesting a segment file, and trigger the first segment file request processing module to process.

The first segment file request processing module is configured to parse out the user information identifier from the URL information carried in the request and manage the user according to the user information identifier, including: allowing or rejecting an access of the user; if allowing the access of the user, notifying the first segment file request feedback module.

The first segment file request feedback module is configured to send the segment file to the client after receiving the notification, and manage the user according to the user information identifier, including: making statistic on size and/or download time of data downloaded by the user.

As shown in FIG. 4, an embodiment of the present invention further provides a server based on an HLS protocol. The server includes a second index file request receiving module 41, a second index file request processing module 42 and a second index file request feedback module 43.

The second index file request receiving module 41 is configured to receive a request from a client for requesting an index file, and trigger a second index request processing module 42 to process.

The second index file request processing module 42 is configured to, read the index file; generate a user information identifier for the user, and construct user management instruction information according to the user information identifier; and modify the index file, and add the user management instruction information in a parameter manner behind Uniform Resource Identifier, URI of each segment file in the index file.

The second index file request feedback module 43 is configured to send the modified index file to the client.

That the second index file request processing module 42 is configured to construct user management instruction information according to the user information identifier includes: using the user information identifier as the user management instruction information; or using an encoded user information identifier as the user management instruction information.

The server may further include a second segment file request receiving module, a second segment file request processing module, and a second segment file request feedback module.

The second segment file request receiving module is configured to, receive a request from the client for requesting a segment file, and trigger a second segment file request processing module to process.

The second segment file request processing module is configured to parse out the user information identifier from the URL information carried in the request and manage the user according to the user information identifier, which includes: allowing or rejecting an access of the user; and if allowing the access of the user, notifying the second segment file request feedback module.

The second segment file request feedback module is configured to send the segment file to the client after receiving the notification, and manage the user according to the user information identifier, which includes: making statistic on size and/or a download time of data downloaded by the user.

### Embodiment one

According to the method, a client interacts with a server according to the following steps.

In step 1, the client acquires a URL of an HLS index file from an EPG (Electronic Program Guide), for example: http://serverip:serverport/path/index.m3u8.

In step 2, the client requests the server according to the URL, and the server constructs a new URL according to the requested content. First, the server constructs a URI of the HLS index file requested by the user, and then inserts user information identifier before the URI, for example: http://serverip:serverport/userid/path/index.m3u8.

Then the server sends the new URL to the client via a redirection way.

In step 3, the client requests the server according to the new URL, and from the URL, the server may parse out that the user information identifier is userid and the URI of the HLS index file is /path/index.m3u8. The server manages the user according to the user information identifier, which includes allowing or rejecting an access of the user. The server sends the index file, /path/index.m3u8, to the client according to the URI. The server manages the user according to the user information identifier, which includes making statistic on size and download time of data downloaded by the user and so on.

In step 4, the client parses out a URI from the index file, index.m3u8, and then uses the URI to replace the index file name and all subsequent contents in the URL of the HLS index file to construct a new URL. For example: http://serverip:serverport/userid/path/s/m/n/1.ts.

The client requests the server with the new URL. The server may parse out that the user information identifier is userid from the new URL. The server manages the user according to the user information identifier, userid, which includes allowing or rejecting an access of the user. The server sends the segment file to the client according to /path/s/m/n/1.ts. The server manages the user according to the user information identifier, userid, which includes making statistic on size and download time of data downloaded by the user and so on.

### Embodiment two

According to the method, a client interacts with a server according to the following steps.

In step 1, the client acquires a URL of an HLS index file from an EPG (Electronic Program Guide), for example: http://serverip:serverport/path/index.m3u8.

In step 2, the client requests the server according to the URL, and the server constructs a new URL according to the requested content. First, the server constructs a URI of the HLS index file requested by the user, and then inserts user information identifier encoded with BASE64 before the URI. For example: Http://serverip:serverport/base64encoder(userid) /path/index.m3u8.

Then the server sends the new URL to the client via a redirection way.

In step 3, the client requests the server according to the new URL, and the server acquires the user information identifier encoded with BASE64 from the URL, and then decodes the encoded user information identifier through BASE64 to acquire that the user information identifier is userid, the URI of the HLS index file is /path/index.m3u8. The server manages the user according to the user information identifier, userid, which includes allowing or rejecting an access of the user. The server sends the index file, /path/index.m3u8, to the client according to the URI. Then the server manages the user according to the user information, which includes making statistic on size and download time of data downloaded by the user and so on.

In step 4, the client parses out a URI from the index file, index.m3u8, and then uses the URI to replace the index file name and all subsequent contents in the URL of the HLS index file to construct a new URL. For example:
Http://serverip:serverport/base64encoder(userid)/path/s/m/n/1.ts.

The client requests the server according to the new URL, and the server acquires the user information identifier encoded with BASE64 from the URL, then decodes the encoded user information identifier through BASE64 to acquire that the user information identifier is userid. Then the server manages the user according to the user information identifier, userid, which includes allowing or rejecting an access of the user. The server sends the segment file to the client according to /path/s/m/n/1.ts. The server manages the user according to the user information identifier, userid, which includes making statistic on size and download time of data downloaded by the user and so on.

### Embodiment three

According to the method, a client interacts with a server according to the following steps.

In step 1, the client acquires a URL of an HLS index file from an EPG (Electronic Program Guide), for example: http://serverip:serverport/path/index.m3u8.

In step 2, the client requests the server according to the URL, and the server constructs a new URL according to the requested content. First, the server constructs the URI of the HLS index file requested by the user, then inserts the user information identifier before the URI, and adds the additional information identification code /.hls/, by which the location of the user information identifier is identified, before the user information identifier. For example: http://serverip:serverport/.hls/userid/path/index.m3u8.

Then the server sends the new URL to the client via a redirection way.

In step 3, the client requests the server according to the new URL. The server parses out the additional identification code /.hls/ from the URL. According to the additional identification code /.hls/, the server may judge that there is the user information identifier in the URL, and then parses out that the user information identifier is userid and the URI of the HLS index file is /path/index.m3u8. Then the server manages the user according to the user information identifier, which includes allowing or rejecting an access of the user. The server sends the index file, /path/index.m3u8, to the client according to the URI. The server manages the user according to the user information identifier, which includes making statistic on a size and download time of data downloaded by the user and so on.

In step 4, the client parses out a URI from the index file, index.m3u8, and then uses the URI to replace the index file name and all subsequent contents in the URL of the HLS index file to construct a new URL. For example: http://serverip:serverport/.hls/userid/path/s/m/n/1.ts.

The client requests the server according to the new URL. The server may parse out the additional identification code /.hls/ from the URL. According to the additional identification code /.hls/, the server may judge that there is the user information identifier is in the URL, and then parses out that the user information identifier is userid. Then the server manages the user according to the user information identifier, which includes allowing or rejecting an access of the user. The server sends the segment file to the client according to /path/s/m/n/1.ts. The server manages the user according to the user information identifier, userid, which includes making statistic on size and download time of data downloaded by the user and so on.

### Embodiment four

According to the method, a client interacts with a server according to the following steps.

In step 1, the client acquires a URL of an HLS index file from an EPG (Electronic Program Guide), for example: http://serverip:serverport/path/index.m3u8.

In step 2, the client requests the server according to the URL, and the server constructs a new URL according to the requested content. First, the server constructs the URI of the HLS index file requested by the user, then inserts the user information identifier encoded with BASE64 before the URI, and adds the additional information identification code /.hls/, by which the location of the user information identifier is identified, before the user information identifier. For example: http://serverip:serverport/.hls/base64encoder(userid)/path/index.m3u8.

Then the server sends the new URL to the client via a redirection way.

In step 3, the client requests the server according to the new URL. The server may parse out the additional identification code /.hls/ from the URL. According to the additional identification code /.hls/, the server may judge that there is the user information identifier in the URL, and then acquires that the user information identifier is userid and the URI of the HLS index file is /path/index.m3u8 after parsing and decoding through BASE64. Then the server manages the user according to the user information identifier, userid, which includes allowing or rejecting an access of the user. The server sends the index file, /path/index.m3u8, to the client according to the URI. The server manages the user according to the user information identifier, which includes making statistic on size and download time of data downloaded by the user and so on.

In step 4, the client parses out a URI from the index file, index.m3u8, and then uses the URI to replace the index file name and all subsequent contents in the URL of the HLS index file to construct a new URL. For example: Http://serverip:serverport/.hls/base64encoder(userid)/path/s/m/n/1.ts.

The client requests the server according to the new URL. The server parses out the additional identification code /.hls/ from the URL. According to the additional identification code /.hls/, the server may judge that there is the user information identifier in the URL, and then acquires that the user information identifier is userid after parsing and decoding through BASE64. Then the server manages the user according to the user information identifier, userid, which includes allowing or rejecting an access of the user. The server sends the segment file to the client according to /path/s/m/n/1.ts. The server manages the user according to the user information identifier, userid, which includes making statistic on size and download time of data downloaded by the user and so on.

### Embodiment five

According to the method, a client interacts with a server according to the following steps.

In step 1, the client acquires a URL of an HLS index file from an EPG (Electronic Program Guide), for example: http://serverip:serverport/path/index.m3u8.

In step 2, the client requests the server according to the URL, and the server generates the user information identifier according to the requested URL, and then reads contents of the HLS index file according to the URI information, /path/index.m3u8, in the URL requested by the user. For example:

```
     #EXTM3U
     #EXT-X-TARGETDURATION:11
     #EXT-X-MEDIA-SEQUENCE:0
     #EXTINF:10.0,
     s/m/n/1.ts
     #EXTINF:10.0,
     s/m/n/2.ts
     #EXTINF:10.0,
     s/m/n/3.ts
     #EXTINF:10.0,
     s/m/n/4.ts
     #EXT-X- ENDLIST
```

The server modifies the contents of the HLS index file and inserts the user information identifier behind the URI of each segment file in a parameter manner to generate contents of a new HLS index file. For example:

```
     #EXTM3U
     #EXT-X-TARGETDURATION:11
     #EXT-X-MEDIA-SEQUENCE:0
     #EXTINF:10.0,
     s/m/n/1.ts?args_userid=userid
     #EXTINF:10.0,
     s/m/n/2.ts?args_userid=userid
     #EXTINF:10.0,
     s/m/n/3.ts?args_userid=userid
     #EXTINF:10.0,
     s/m/n/4.ts?args_userid=userid
     #EXT-X- ENDLIST
```

The server sends the contents of the new HLS index file to the client.

In step 3, the client parses out a URI from the index file, index.m3u8, and then uses the URI to replace the index file name and all subsequent contents in the URL of the HLS index file to construct a new URL. For example: http://serverip:serverport/path/s/m/n/1.ts? args_userid=userid.

The client requests the server with the new URL. The server may parse out the user information identifier, userid, from the new URL. The server manages the user according to the user information identifier, userid, which includes allowing or rejecting an access of the user. The server sends the segment file to the client according to /path/s/m/n/1.ts. The server manages the user according to the user information identifier, userid, which includes making statistic on size and download time of data downloaded by the user and so on.

### Embodiment six

According to the method, a client interacts with a server according to the following steps.

In step 1, the client acquires a URL of an HLS index file from an EPG (Electronic Program Guide), for example: http://serverip:serverport/path/index.m3u8.

In step 2, the client requests the server according to the URL, and the server generates the user information identifier according to the requested URL, and then reads contents of the HLS index file according to the URI information, /path/index.m3u8, in the URL requested by the user. For example:

```
     #EXTM3U
     #EXT-X-TARGETDURATION:11
     #EXT-X-MEDIA-SEQUENCE:0
     #EXTINF:10.0,
     s/m/n/1.ts
     #EXTINF:10.0,
     s/m/n/2.ts
     #EXTINF:10.0,
     s/m/n/3.ts
     #EXTINF:10.0,
     s/m/n/4.ts
     #EXT-X- ENDLIST
```

The server modifies the contents of the HLS index file and inserts the user information identifier encoded with BASE64 behind the URI of each segment file in a parameter manner to generate contents of a new HLS index file. For example:

```
     #EXTM3U
     #EXT-X-TARGETDURATION:11
     #EXT-X-MEDIA-SEQUENCE:0
     #EXTINF:10.0,
     s/m/n/l.ts?args_userid=base64encoder(userid)
     #EXTINF:10.0,
     s/m/n/2.ts?args_userid= base64encoder(userid)
     #EXTINF:10.0,
     s/m/n/3.ts?args_userid= base64encoder(userid)
     #EXTINF:10.0,
     s/m/n/4.ts?args_userid= base64encoder(userid)
     #EXT-X- ENDLIST
```

The server sends the contents of the new HLS index file to the client.

In step 3, the client parses out a URI from the index file, index.m3u8, and then uses the URI to replace the index file name and all subsequent contents in the URL of the HLS index file to construct a new URL. For example: http://serverip:serverport/path/s/m/n/1.ts?args_userid=base64encoder(userid).

The client requests the server with the new URL. The server may acquire the user information identifier, userid, from the new URL after parsing and decoding through BASE64. The server manages the user according to the user information identifier, userid, which includes allowing or rejecting an access of the user. The server sends the segment file to the client according to /path/s/m/n/1.ts. The server manages the user according to the user information identifier, userid, which includes making statistic on size and download time of data downloaded by the user and so on.

Those skilled in the art can understand that all or parts of steps of the above-mentioned embodiments can be implemented using computer program processes. The computer program can be stored in one computer readable storage medium. The computer program is executed on the corresponding hardware platform (e.g., system, equipment, apparatus, device, etc), and when the computer program is executed, one of steps of the method embodiments or a combination thereof is included.

In an exemplary embodiment, all or parts of steps of the above-mentioned embodiments can also be implemented using integrated circuits, these steps can be fabricated into individual integrated circuit modules respectively, or multiple modules or steps thereof are fabricated into a single integrated circuit to implement.

Devices/functional modules/functional units in the above-mentioned embodiments can be implemented using a general-purpose computing device, they can be centralized on a single computing device, or distributed on the network which consists of multiple computing devices.

Devices/functional modules/functional units in the above-mentioned embodiments are implemented in the form of software functional module, and when sold or used as a separate product, they can be stored in one computer readable storage medium. The above-mentioned computer readable storage medium can be read-only memory, disk or compact disc, etc.

### Industrial Applicability

According to a method for acquiring user information based on an HLS protocol and a server based on the HLS protocol provided by the embodiments of the present invention, the server inserts instruction information of the user identification information before the URI of the index file, and then the server sends the URL of the index file to the client in a redirection way, or the server modifies the index file, adds indication information of the user identification information in a parameter manner behind the URI of each segment file in the index file, and then sends the modified index file to the client. Both of the above-mentioned manners can make the URL information for the client to request a segment file carry the user identification information, such that the server supporting the HLS protocol can also acquire the user information of the client when the client requests the segment file, thereby managing the user.

## Claims

1. A method for acquiring user information based on a Hyper Text Transfer Protocol Live Streaming, HLS, protocol, applied to a server supporting the HLS protocol, comprising:
after receiving a request from a client for requesting an index file, acquiring Uniform Resource Locator, URL, information and Uniform Resource Identifier, URI, information of the index file from the request;
generating a user information identifier for a user, and constructing user management instruction information according to the user information identifier;
modifying the URL of the index file, inserting the user management instruction information before the URI of the index file, and sending the modified URL of the index file to the client.

2. The method according to claim 1, wherein,
constructing user management instruction information according to the user information identifier comprises any one of the following modes a) - d):
a) using the user information identifier as the user management instruction information;
b) using an encoded user information identifier as the user management instruction information;
c) using an additional information identification code and the user information identifier as the user management instruction information;
d) using an additional information identification code and an encoded user information identifier as the user management instruction information;
wherein, the additional information identification code is used to identify whether there is a user information identifier in the URL.

3. The method according to claim 2, wherein,
the encoded user information identifier is a user information identifier encoded with BASE64.

4. The method according to any one of claims 1-3, further comprising:
after receiving a request from a client for requesting a segment file, parsing out the user information identifier from the URL information carried in the request, and managing the user according to the user information identifier, wherein managing the user according to the user information identifier comprises: allowing or rejecting an access of the user;
when allowing the access of the user, sending the segment file to the client, and managing the user according to the user information identifier, wherein managing the user according to the user information identifier comprises: making statistic on size and/or download time of data downloaded by the user.

5. A method for acquiring user information based on a Hyper Text Transfer Protocol Live Streaming, HLS, protocol, applied to a server supporting the HLS protocol, comprising:
after receiving a request from a client for requesting an index file, reading the index file;
generating a user information identifier for a user, and constructing user management instruction information according to the user information identifier;
modifying the index file, adding the user management instruction information in a parameter manner behind Uniform Resource Identifier, URI, of each segment file in the index file, and sending the modified index file to the client.

6. The method according to claim 5, wherein,
constructing user management instruction information according to the user information identifier comprises: using the user information identifier as the user management instruction information; or using an encoded user information identifier as the user management instruction information.

7. The method according to claim 6, wherein,
the encoded user information identifier is a user information identifier encoded with BASE64.

8. The method according to any one of claims 5-7, further comprising:
after receiving a request from a client for requesting a segment file, parsing out a user information identifier from URL information carried in the request, and managing the user according to the user information identifier, wherein managing the user according to the user information identifier comprises: allowing or rejecting an access of the user;
when allowing the access of the user, sending the segment file to the client, and managing the user according to the user information identifier, wherein managing the user according to the user information identifier comprises: making statistic on size and/or download time of data downloaded by the user.

9. A server supporting a Hyper Text Transfer Protocol Live Streaming, HLS, protocol, comprising:
a first index file request receiving module, configured to receive a request from a client for requesting an index file, and trigger a first index request processing module to process;
the first index file request processing module, configured to acquire Uniform Resource Locator, URL, information and Uniform Resource Identifier, URI, information of the index file from the request; generate user information identifier for a user, and construct user management instruction information according to the user information identifier; and modify the URL of the index file, insert the user management instruction information before the URI of the index file;
a first index file request feedback module, configured to send the modified URL of the index file to the client.

10. The server according to claim 9, wherein,
that the first index file request processing module is configured to construct user management instruction information according to the user information identifier comprises any one of the following modes a) - d):
a) using the user information identifier as the user management instruction information;
b) using an encoded user information identifier as the user management instruction information;
c) using an additional information identification code and the user information identifier as the user management instruction information;
d) using an additional information identification code and an encoded user information identifier as the user management instruction information;
wherein, the additional information identification code is used to identify whether there is a user information identifier in the URL.

11. The server according to claim 10, wherein,
the encoded user information identifier is a user information identifier encoded with BASE64.

12. The server according to any one of claims 9 to 11, further comprising: a first segment file request receiving module, a first segment file request processing module and a first segment file request feedback module; wherein,
the first segment file request receiving module is configured to, receive a request from the client for requesting a segment file, and trigger the first segment file request processing module to process;
the first segment file request processing module is configured to parse out the user information identifier from the URL information carried in the request and manage the user according to the user information identifier, wherein managing the user according to the user information identifier comprises: allowing or rejecting an access of the user; when allowing the access of the user, notifying the first segment file request feedback module;
the first segment file request feedback module is configured to send the segment file to the client after receiving the notification, and manage the user according to the user information identifier, wherein managing the user according to the user information identifier comprises:
making statistic on size and/or download time of data downloaded by the user.

13. A server supporting a Hyper Text Transfer Protocol Live Streaming, HLS, protocol, comprising:
a second index file request receiving module, configured to receive a request from a client for requesting an index file, and trigger a second index request processing module to process;
the second index file request processing module, configured to read the index file; generate a user information identifier for a user, and construct user management instruction information according to the user information identifier; and modify the index file, and add the user management instruction information in a parameter manner behind Uniform Resource Identifier, URI, of each segment file in the index file;
a second index file request feedback module, configured to send the modified index file to the client.

14. The server according to claim 13, wherein,
that the second index file request processing module is configured to construct user management instruction information according to the user information identifier comprises:
using the user information identifier as the user management instruction information; or using an encoded user information identifier as the user management instruction information.

15. The server according to claim 14, wherein,
the encoded user information identifier is a user information identifier encoded with BASE64.

16. The server according to any one of claims 13-15, further comprising: a second segment file request receiving module, a second segment file request processing module, and a second segment file request feedback module; wherein,
the second segment file request receiving module is configured to, receive a request from the client for requesting a segment file, and trigger a second segment file request processing module to process;
the second segment file request processing module is configured to parse out a user information identifier from URL information carried in the request and manage the user according to the user information identifier, wherein managing the user according to the user information identifier comprises: allowing or rejecting an access of the user; when allowing the access of the user, notifying the second segment file request feedback module;
the second segment file request feedback module is configured to send the segment file to the client after receiving the notification, and manage the user according to the user information identifier, wherein managing the user according to the user information identifier comprises:
making statistic on size and/or download time of data downloaded by the user.

17. A computer storage medium, storing computer-executable instructions which are used to execute the method according to any one of claims 1-8.
